# FASCICULE DE BREVET EUROPEEN

(11) **EP 1 648 054 B1**
(45) Date de publication et mention de la délivrance du brevet: **16.09.2009**
(21) Numéro de dépôt: 05292122.8
(22) Date de dépôt: 12.10.2005
(51) Int. Cl.: H01R 29/00, B60R 16/02

(54) **Dispositif et procédé de raccordement d'un faisceau de conducteurs branchés aléatoirement à un faisceau de conducteurs identifiés, en particulier pour le raccordement d'un faisceau d'attelage**
Vorrichtung und Verfahren zur Verbindung eines willkürlich verzweigten Kabelbaums an einen Kabelbaum mit bestimmten Kabeln, insbesondere zur Verbindung eines Anhängerkupplungskabels
Apparatus and process for connecting an arbitrarily branched wire harness to a wire harness having certain wires, especially for connecting a trailer coupling cable

(30) Priorité: 15.10.2004 FR 0410963
(43) Date de publication de la demande: 19.04.2006
(73) Titulaire: Construction Electromecaniques Thome, 77250 Donnemarie Dontilly (FR)
(72) Inventeur: Plas, Daniel, 77210 Avon (FR); Laperle, Patrick, 45120 Girolles (FR)
(74) Mandataire: Delprat, Olivier

(56) Documents cités:
- US-A- 5 675 322

## Description

L'invention concerne, de manière générale, le raccordement d'un premier faisceau de conducteurs à un deuxième faisceau de conducteurs.

Dans une application particulièrement intéressante, l'invention concerne le raccordement d'un faisceau d'attelage sur un faisceau de feux arrière de véhicule automobile.

Or, le montage d'un faisceau d'attelage sur un faisceau arrière de véhicule automobile confronte l'installateur à plusieurs types de difficultés obligeant les installateurs à identifier les conducteurs du faisceau de feux arrière afin de les raccorder au faisceau d'attelage. En effet, la configuration des faisceaux de feux arrière, les boîtiers relais ainsi que la forme des connecteurs sont spécifiques à chaque véhicule. Dès lors, au cours de l'installation, l'installateur doit consulter un document technique spécifique pour chaque véhicule pour identifier les conducteurs du faisceau de feux arrière, ce qui engendre une perte de temps non négligeable.

Le document US-A-5 442 170 divulgue un dispositif selon le préambule de la revendication 1.

Le but de l'invention est donc de pallier les inconvénients précités et de fournir un dispositif universel de raccordement de deux faisceaux de conducteurs ne nécessitant pas d'identifier, avant montage, les conducteurs des deux faisceaux à connecter.

L'invention a donc pour objet un dispositif selon la revendication 1.

Dans un mode de réalisation, le boîtier de raccordement comporte un étage d'entrée destiné à être raccordé aux conducteurs du premier faisceau et un étage de sortie destiné à être raccordé aux conducteurs du deuxième faisceau, les moyens d'adressage assignant les entrées aux sorties de l'étage de sortie.

Dans un mode de réalisation particulier, les moyens d'adressage comportent un boîtier externe constituant l'interface homme/machine pour sélectionner des commandes et identifier le conducteur du premier faisceau correspondant à ladite commande après acquittement de la commande.

Par exemple, les moyens d'adressage sont reliés au boîtier de raccordement par une liaison filaire.

Les moyens d'adressage peuvent également être intégrés au boîtier de raccordement qui comprend l'interface homme-machine pour sélectionner des commandes et identifier le conducteur du premier faisceau correspondant à ladite commande, après acquittement de la commande.

Selon une autre variante, les moyens d'adressage peuvent être reliés au boîtier de raccordement par une liaison sans fil.

Selon une autre caractéristique de l'invention, l'étage de sortie comporte des circuits de puissance pour l'alimentation des conducteurs du deuxième faisceau.

De préférence, les circuits de puissance comportent des moyens de détection de la présence d'une charge branchée sur un conducteur correspondant du deuxième faisceau ou d'une surcharge dans ce conducteur.

Les moyens de détection d'une partie au moins des circuits de puissance de l'étage de sortie peuvent alors constituer des moyens de détection de la présence d'un équipement connecté électriquement au deuxième faisceau.

Dans les différents modes de réalisations envisagés, les moyens de détection peuvent être intégrés aux circuits de puissance ou intégrés à des composants dédiés séparés des circuits de puissance.

Selon un deuxième aspect, l'invention a également pour objet un procédé de raccordement d'un premier faisceau de conducteurs à un deuxième faisceau de conducteurs, au moyen d'un dispositif de raccordement tel que défini ci-dessus, qui comporte les étapes de :
- raccordement du boîtier de raccordement au premier faisceau, et, pour chaque conducteur du premier faisceau ;
- sélection d'une commande tendant à faire apparaître un signal sur le conducteur ;
- exécution de la commande ; et
- adressage de l'entrée à laquelle ledit conducteur est raccordé pour l'assigner à un conducteur correspondant du deuxième faisceau.

Dans un mode de mise en oeuvre, le procédé comporte en outre une étape de contrôle de la présence d'une tension en entrée du dispositif de raccordement.

Il peut en outre comporter une étape de détection d'un équipement connecté électriquement au deuxième faisceau. Une surcharge peut également être détectée, de la même manière.

D'autres buts, caractéristiques et avantages de l'invention apparaîtront à la lecture de la description suivante, donnée uniquement à titre d'exemple non-limitatif, et faite en référence aux dessins annexés sur lesquels :
- la figure 1 est un schéma synoptique illustrant l'architecture générale d'un dispositif de raccordement conforme à l'invention ;
- la figure 2 est un schéma électronique illustrant la constitution du boîtier de raccordement du dispositif de la figure 1 ;
- la figure 3 est un tableau illustrant la configuration des entrées du boîtier de raccordement de la figure 1 ; et
- la figure 4 illustre le fonctionnement du dispositif de la figure 1, pour le raccordement d'un faisceau d'attelage à un faisceau de feux arrière de véhicule automobile.

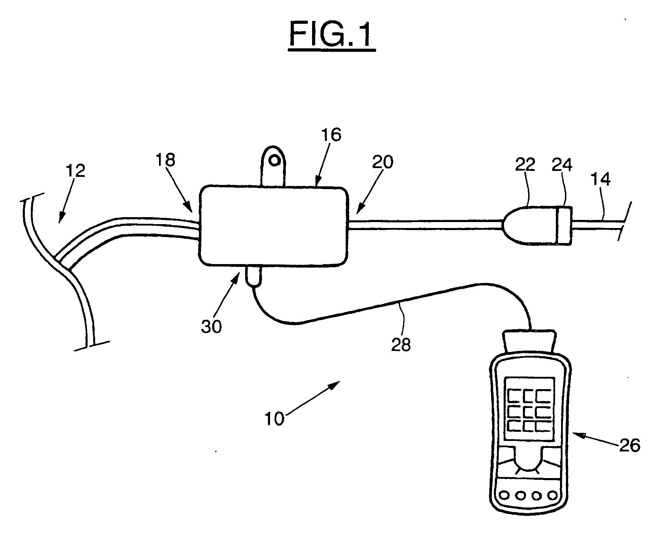

Sur la figure 1, on a représenté l'architecture générale d'un dispositif de raccordement pour faisceau de conducteurs, désigné par la référence numérique générale 10.

Il est destiné à permettre le raccordement d'un premier faisceau 12 de conducteurs à un deuxième faisceau 14 de conducteurs.

Plus particulièrement, il est destiné à permettre l'affectation des conducteurs de l'un des faisceau branché aléatoirement, aux conducteurs de l'autre faisceau préalablement identifiés pour les faire correspondre. Dans l'exemple de réalisation considéré, le dispositif 10 est destiné à permettre le raccordement d'un faisceau 14 d'attelage à un faisceau 12 de feux arrière de véhicule sans nécessiter d'identifier au préalable les conducteurs du faisceau de feux arrière, le dispositif se chargeant d'adresser les conducteurs du faisceau de feux arrière au faisceau d'attelage.

Le dispositif de raccordement selon l'invention comporte un boîtier de raccordement 16 comprenant un ensemble d'entrées adressables 18 et des conducteurs de sortie 20 équipés d'une prise 22 venant se brancher sur une prise correspondante 24 du faisceau d'attelage 14.

Afin de pallier les inconvénients liés à la disparité de configuration du faisceau de feux arrière d'un modèle de véhicule à un autre, le dispositif 10 est pourvu de moyens d'adressage permettant de modifier la configuration des entrées 18 en fonction des conducteurs qui lui sont raccordés.

Dans l'exemple de réalisation représenté, ces moyens d'adressage comprennent un boîtier d'adressage 26 connecté par une liaison filaire 28 à une entrée d'adressage 30 du boîtier 16. A cet effet on peut utiliser toute liaison filaire conventionnelle directe, ou prévoir une communication entre les moyens d'adressage et le boîtier de raccordement par l'intermédiaire du réseau internet. Toute autre liaison appropriée pour l'utilisation envisagée peut être utilisée, par exemple une liaison sans fil Wi-Fi, Bluetooth, ...On pourrait également prévoir d'embarquer les moyens d'adressage dans le boîtier de raccordement 16. Ainsi, le boîtier de raccordement pourrait intégrer un système d'adressage avec une interface simplifiée.

On notera également que le boîtier d'adressage peut inclure des fonctions permettant d'activer ou désactiver des fonctions du véhicule en fonction de la logique qu'il intègre et de la réglementation en vigueur.

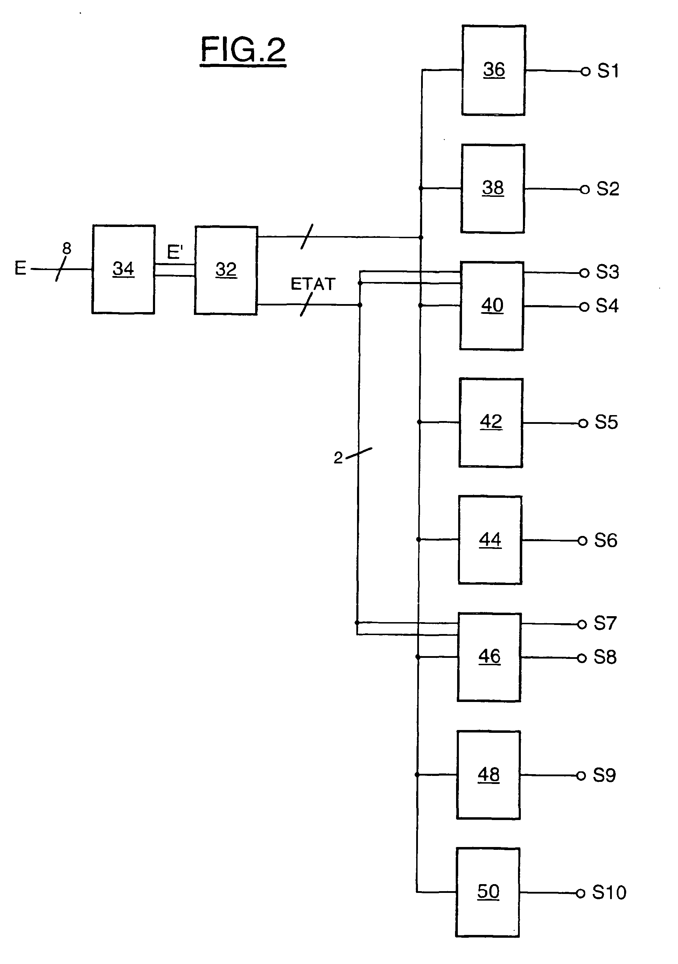

En se référant maintenant à la figure 2, le boîtier de raccordement comprend un circuit d'entrée 34 recevant, en entrée, les signaux E provenant du faisceau de feux arrière 12, un circuit électronique de programmation 32 auquel les signaux E' issus du circuit d'entrée sont délivrés, et des étages de sortie 36, 38, 40, 42, 44, 46, 48 et 50 dont les sorties S1, S2, S3, S4, S5, S6, S7, S8, S9 et S10 constituent les sorties 20 du boîtier de raccordement.

Les composants utilisés pour la réalisation des circuits de sorties 36 à 50 incorporent chacun une ligne de diagnostic permettant de détecter la présence d'une charge branchée. Ainsi, par exemple, les circuits de sortie désignés par les références 40 et 46 délivrent au microcontrôleur des signaux « ETAT » indiquant le bon raccordement d'une charge sur les conducteurs du faisceau d'attelage correspondants. Il s'agit, par exemple, de vérifier que le circuit aval est fermé et permet ainsi de contrôler le bon fonctionnement d'une ampoule. Le branchement d'une charge sur tout ou partie de ces conducteurs est considéré comme un raccordement d'attelage. Des moyens de détection d'une surcharge dans les conducteurs du faisceau d'attelage peuvent également être prévus afin, par exemple de détecter la présence d'un court-circuit. Ces moyens de détection de charge ou de surcharge peuvent être intégrés aux circuits de puissance ou être prévus dans des circuits prévus à cet effet

Par exemple, dans le cadre du raccordement d'un attelage à un faisceau de feux arrière automobile, les circuits de sortie 36 à 50 correspondent respectivement aux feux de signalisation suivants :
- clignotant gauche de la remorque,
- feux de brouillard de la remorque,
- clignotant droit de la remorque,
- feux de brouillard du véhicule,
- clignotant gauche du véhicule,
- clignotant droit du véhicule,
- feu de position droit,
- feux de stop,
- feu de position gauche, et
- feux de recul.

On notera néanmoins que lorsqu'un feu de brouillard équipe une remorque, dans ce cas, le feu de brouillard du véhicule est désactivé.

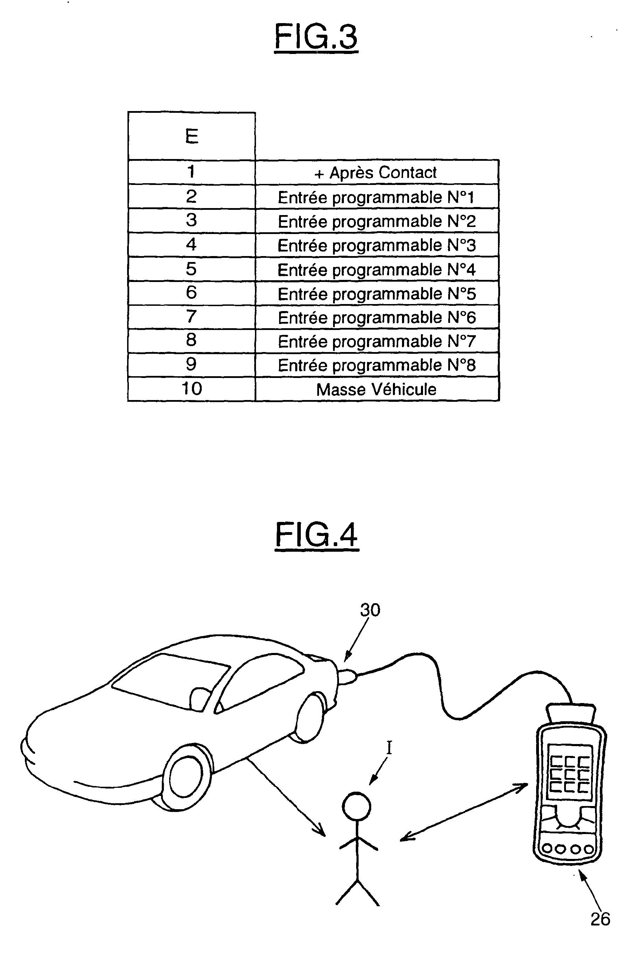

Sur la figure 3, on a représenté le brochage du faisceau en entrée E de l'étage d'entrée 34. Comme on le voit sur cette figure, par exemple, dix bornes sont utilisées, parmi lesquelles huit entrées adressables servant au raccordement proprement dit des conducteurs du faisceau 12 de feux arrière du véhicule. Lors du raccordement, ces entrées sont indifférenciées et peuvent dès lors être utilisées pour l'alimentation de l'un quelconque des conducteurs du faisceau 12.

Au contraire le brochage du faisceau de sorties est fixe. L'adressage des entrées du boîtier de raccordement au moyen du boîtier d'adressage 26 consiste dès lors, après raccordement du boîtier de raccordement au faisceau de feux arrière 12, à configurer les entrées adressables du boîtier 16 de manière à les faire correspondre aux sorties afin, par exemple, qu'un conducteur du faisceau arrière 12 correspondant à l'alimentation d'un feu de stop soit convenablement connecté à la sortie du boîtier de raccordement correspondant au feu de stop.

Cet adressage constitue une procédure à la portée d'un homme du métier. Elle ne sera donc pas décrite en détail par la suite. On notera cependant qu'elle consiste essentiellement à affecter à une ou plusieurs sorties du circuit électronique de programmation une ou plusieurs entrées connectées aléatoirement mais dont la fonction est identifiée de manière à les faire correspondre.

On va maintenant décrire, en référence à la figure 4, un exemple d'utilisation d'un dispositif selon l'invention pour raccorder un faisceau d'attelage à un faisceau de feux arrière de véhicule automobile.

Pour ce faire, il convient tout d'abord de raccorder le circuit d'entrée 34 au faisceau de feux arrière en raccordant indifféremment les conducteurs de ce faisceau 12 aux entrées indifférenciées E. On connecte également les conducteurs du faisceau d'attelage sur les sorties correspondantes S1 à S10.

Après cette étape préalable de raccordement, on sélectionne successivement, au moyen du boîtier de commande 26, chacune des commandes qui correspondent aux fonctions à réaliser et qui tendent chacune à l'apparition d'un signal sur les entrées E. Cette sélection s'effectue au moyen d'une interface homme/machine appropriée présentée à un installateur I sur le boîtier d'adressage 26.

Après sélection de chaque commande, et acquittement de la commande, l'entrée sur laquelle le signal est apparu peut alors être identifiée et être mise en correspondance avec la sortie qui lui correspond. Cependant, afin de garantir le bon déroulement de cette phase d'adressage, le circuit électronique 32 surveille les niveaux de tension présents sur les entrées E'. De même, en fonctionnement, c'est-à-dire lors du fonctionnement normal du véhicule attelé, en dehors des phases d'adressage, le circuit électronique 32 surveille que le faisceau 14 est correctement raccordé en surveillant les niveaux des signaux « ETAT ». De la même manière, des surcharges éventuelles dues à une anomalie de fonctionnement, tel qu'un court-circuit, peuvent également être détectées.

Comme on le conçoit, l'invention, qui utilise un boîtier de raccordement pourvu d'entrées adressables et de moyens d'adressage de ces entrées, permet d'assurer un raccordement aisé de deux faisceaux de conducteurs sans prévoir une identification préalable des conducteurs du faisceau sur lequel un équipement doit être branché.

Il a en également été constaté que l'utilisation du dispositif selon l'invention ne perturbe pas le fonctionnement du véhicule dans la mesure où il n'engendre pas d'anomalie de fonctionnement.

En outre, de manière générale, le dispositif de raccordement de faisceaux selon l'invention présente les avantages suivants.

Comme indiqué précédemment, le boîtier d'adressage peut inclure des fonctions permettant d'activer ou désactiver des fonctions du véhicule suivant la logique qu'il intègre et la réglementation en vigueur. Le signal ainsi élaboré, en réponse, est détecté par une entrée E provenant du faisceau de feu arrière, le dispositif de raccordement se chargeant alors d'enregistrer la donnée reçue puis de l'adresser à un conducteur de sortie. Le dispositif de raccordement assure ainsi essentiellement l'adressage des entrées du boîtier de raccordement pour faire correspondre les conducteurs des faisceaux à raccorder.

Dès lors, le nombre de conducteurs des faisceaux à raccorder peut varier. Ainsi, par exemple, le nombre d'entrées connectées peut être indifféremment inférieur ou supérieur au nombre de sorties connectées.

On notera également que les paramètres détectés en entrée du dispositif du raccordement après sollicitation d'une fonction du véhicule peuvent être de diverses natures. De tels paramètres peuvent être constitués par des tensions, des fréquences, ..., élaborées dans le cadre de fonctions de diverses natures, telles que des fonctions mettant en oeuvre des signaux de modulation par largeur d'impulsions, les paramètres pouvant alors être constitués par le rapport cyclique, la fréquence, la durée des impulsions, ....

On notera enfin que l'essentiel de la programmation de l'adressage des entrées, de l'activation ou de la désactivation des fonctions du véhicule, intégré au dispositif d'adressage, peut soit être incorporé au boîtier de raccordement, sous la forme d'un module logiciel intégré au boîtier, soit être réalisé sous la forme d'un boîtier d'adressage amovible raccordé au boîtier de raccordement 16 par une liaison filaire, comme illustré à la figure 1.

Cependant, le mode de réalisation selon lequel les moyens d'adressage sont réalisés sous la forme d'un boîtier externe est avantageux dans la mesure où il permet d'héberger les éléments les plus complexes du dispositif de raccordement au sein d'un boîtier amovible qui, après raccordement des conducteurs des premier et deuxième faisceaux, peut être séparé du boîtier de raccordement pour être utilisé pour le raccordement d'autres faisceaux. Dans un tel cas, après raccordement, le boîtier de raccordement 16 reste seul installé pour assurer la mise en connexion des conducteurs des faisceaux. Comme on le conçoit, ce mode de réalisation permet de réduire considérablement les coûts de fabrication des dispositifs de raccordement dans la mesure où un boîtier d'adressage peut être partagé pour plusieurs boîtiers de raccordement.

## Revendications

1. Dispositif de raccordement d'un premier faisceau (12) de conducteurs branchés aléatoirement à un deuxième faisceau (14) de conducteurs identifiés, comportant un boîtier de raccordement (16) destiné à être raccordé entre les premier et deuxième faisceaux (12,14), des entrées adressables (E), et en ce qu'il comprend des moyens (26) d'adressage des entrées adressables pour configurer le boîtier de raccordement (16) de manière à faire correspondre les conducteurs de l'un des faisceaux avec les conducteurs de l'autre faisceau, **caractérisé en ce que** les moyens d'adressage comportant une interface homme/machine pour sélectionner des commandes et identifier le conducteur du premier faisceau (12) correspondant à ladite commande, après acquittement de la commande.

2. Dispositif selon la revendication 1, **caractérisé en ce que** le boîtier de raccordement (16) comporte un étage d'entrée (34) destiné à être raccordé aux conducteurs du premier faisceau et un étage de sortie destiné à être raccordé aux conducteurs du deuxième faisceau, les moyens d'adressage assignant les entrées aux sorties de l'étage de sortie.

3. Dispositif selon l'une des revendications 1 et 2, **caractérisé en ce que** les moyens d'adressage comportent un boîtier externe (26) constituant ladite interface homme/machine pour sélectionner des commandes et identifier le conducteur du premier faisceau (12) correspondant à ladite commande, après acquittement de la commande.

4. Dispositif selon la revendication 3, **caractérisé en ce que** les moyens d'adressage sont reliés au boîtier de raccordement (16) par une liaison filaire.

5. Dispositif selon l'une des revendications 1 et 2, **caractérisé en ce que** les moyens d'adressage sont intégrés au boîtier de raccordement qui constitue l'interface homme-machine pour sélectionner des commandes et identifier le conducteur du premier faisceau (12) correspondant à ladite commande, après acquittement de la commande.

6. Dispositif selon l'une quelconque des revendications 1 à 3, **caractérisé en ce que** les moyens d'adressage sont reliés au boîtier de raccordement par une liaison sans fil.

7. Utilisation d'un dispositif selon l'une quelconque des revendications 1 à 6, pour le raccordement d'un faisceau d'attelage à un faisceau de feux arrière de véhicule automobile,

8. Procédé de raccordement d'un premier faisceau de conducteurs à un deuxième faisceau de conducteurs, au moyen d'un dispositif de raccordement selon l'une quelconque des revendications 1 à 11, **caractérisé en ce qu'**il comporte les étapes de :
- raccordement du boîtier de raccordement (16) sur le premier faisceau (12) et pour chaque conducteur du premier faisceau ;
- sélection d'une commande tendant à faire apparaître un signal sur le conducteur du premier faisceau (12) ;
- exécution de la commande ; et
- adressage de l'entrée à laquelle ledit conducteur est raccordé pour l'assigner à un conducteur correspondant du deuxième faisceau.

9. Procédé selon la revendication 8, **caractérisé en ce qu'**il comporte en outre une étape de contrôle de la présence d'une tension en entrée du dispositif de raccordement.

10. Procédé selon l'une des revendications 8 et 9, **caractérisé en ce qu'**il comporte en outre une étape de détection d'un équipement connecté électriquement au deuxième faisceau (14) ou d'une surcharge dans ce faisceau.

## Claims

1. Device for connecting a first bundle (12) of conductors connected randomly to a second bundle (14) of identified conductors, comprising a connection box (16) designed to be connected between the first and second bundles (12, 14), addressable inputs (E), and in that it comprises means (26) of addressing the addressable inputs to configure the connection box (16) so as to make the conductors of one of the bundles correspond with the conductors of the other bundle, **characterized in that** the addressing means comprise a human/machine interface for selecting commands and identifying the conductor of the first bundle (12) corresponding to said command, after the command has been acknowledged.

2. Device according to Claim 1, **characterized in that** the connection box (16) comprises an input stage (34) designed to be connected to the conductors of the first bundle and an output stage designed to be connected to the conductors of the second bundle, the addressing means assigning the inputs to the outputs of the output stage.

3. Device according to one of Claims 1 or 2, **characterized in that** the addressing means comprise an external box (26) forming said human/machine interface for selecting commands and identifying the conductor of the first bundle (12) corresponding to said command, after the command has been acknowledged.

4. Device according to Claim 3, **characterized in that** the addressing means are linked to the connection box (16) by wire link.

5. Device according to one of Claims 1 and 2, **characterized in that** the addressing means are incorporated in the connection box which forms the human/machine interface for selecting commands and identifying the conductor of the first bundle (12) corresponding to said command, after the command has been acknowledged.

6. Device according to any one of Claims 1 to 3, **characterized in that** the addressing means are linked to the connection box by a wireless link.

7. Use of a device according to any one of Claims 1 to 6, to connect a coupling system bundle to a rear light bundle of a motor vehicle.

8. Method of connecting a first bundle of conductors to a second bundle of conductors, by means of a connection device according to any one of Claims 1 to 11, **characterized in that** it comprises steps for:
- connecting the connection box (16) to the first bundle (12) and, for each conductor of the first bundle;
- selecting a command causing a signal to appear on the conductor of the first bundle (12);
- executing the command; and
- addressing the input to which said conductor is connected to assign it to a corresponding conductor of the second bundle.

9. Method according to Claim 8, **characterized in that** it also comprises a step for checking the presence of a voltage at the input of the connection device.

10. Method according to either of Claims 8 or 9, **characterized in that** it also comprises a step for detecting an item of equipment electrically connected to the second bundle (14) or an overload in this bundle.

## Patentansprüche

1. Vorrichtung zum Verbinden eines ersten Kabelstrangs (12) aus zufällig verzweigten Leitern mit einem zweiten Kabelstrang (14) aus gekennzeichneten Leitern, mit einem Verbindungsgehäuse (16), das dazu bestimmt ist, zwischen den ersten und den zweiten Kabelstrang (12, 14) gekoppelt zu werden, und adressierbaren Eingängen (E), wobei sie Mittel (26) zum Adressieren der adressierbaren Eingänge enthält, um das Verbindungsgehäuse (16) in der Weise zu konfigurieren, dass die Leiter des Einen der Kabelstränge den Leitern des anderen Kabelstrangs entsprechen, **dadurch gekennzeichnet, dass** die Adressierungsmittel eine Mensch/Maschinen-Schnittstelle enthalten, um Befehle auszuwählen und um den Leiter des ersten Kabelstrangs (12), der dem Befehl entspricht, nach der Quittierung des Befehls zu kennzeichnen.

2. Vorrichtung nach Anspruch 1, **dadurch gekennzeichnet, dass** das Verbindungsgehäuse (16) eine Eingangsstufe (34), die dazu bestimmt ist, mit den Leitern des ersten Kabelstrangs verbunden zu werden, und eine Ausgangsstufe, die dazu bestimmt ist, mit den Leitern des zweiten Kabelstrangs verbunden zu werden, enthält, wobei die Adressierungsmittel die Eingänge den Ausgängen der Ausgangsstufe zuweisen.

3. Vorrichtung nach einem der Ansprüche 1 und 2, **dadurch gekennzeichnet, dass** die Adressierungsmittel ein externes Gehäuse (26) enthalten, das die Mensch/Maschinen-Schnittstelle bildet, um Befehle auszuwählen und um den Leiter des ersten Kabelstrangs (12), der dem Befehl entspricht, nach der Quittierung des Befehls zu kennzeichnen.

4. Vorrichtung nach Anspruch 3, **dadurch gekennzeichnet, dass** die Adressierungsmittel mit dem Verbindungsgehäuse (16) durch eine Drahtverbindung verbunden sind.

5. Vorrichtung nach einem der Ansprüche 1 und 2, **dadurch gekennzeichnet, dass** die Adressierungsmittel in das Verbindungsgehäuse integriert sind, das die Mensch/Maschinen-Schnittstelle bildet, um Befehle auszuwählen und den Leiter des ersten Kabelstrangs (12), der dem Befehl entspricht, nach der Quittierung des Befehls zu kennzeichnen.

6. Vorrichtung nach einem der Ansprüche 1 bis 3, **dadurch gekennzeichnet, dass** die Adressierungsmittel mit dem Verbindungsgehäuse durch eine drahtlose Verbindung verbunden sind.

7. Verwendung einer Vorrichtung nach einem der Ansprüche 1 bis 6 für die Verbindung eines Anhängerkupplungs-Kabelstrangs mit einem Kraftfahrzeugrücklicht-Kabelstrang.

8. Verfahren zum Verbinden eines ersten Kabelstrangs mit einem zweiten Kabelstrang mittels einer Verbindungsvorrichtung nach einem der Ansprüche 1 bis 11, **dadurch gekennzeichnet, dass** es die folgenden Schritte enthält:
- Verbinden des Verbindungsgehäuses (16) mit dem ersten Kabelstrang (12) und mit jedem Leiter des ersten Kabelstrangs;
- Auswählen eines Befehls, der in dem Leiter des ersten Kabelstrangs (12) ein Signal auftreten lässt;
- Ausführen des Befehls; und
- Adressieren des Eingangs, mit dem der Leiter verbunden ist, um ihn einem entsprechenden Leiter des zweiten Kabelstrangs zuzuweisen.

9. Verfahren nach Anspruch 8, **dadurch gekennzeichnet, dass** es außerdem einen Schritt der Kontrolle des Vorhandenseins einer Spannung am Eingang der Verbindungsvorrichtung enthält.

10. Verfahren nach einem der Ansprüche 8 und 9, **dadurch gekennzeichnet, dass** es außerdem einen Schritt des Erfassens eines mit dem zweiten Kabelstrang (14) elektrisch verbundenen Geräts oder einer Überlastung in diesem Kabelstrang enthält.
